# FASCICULE DE BREVET EUROPEEN

(11) **EP 0 946 859 B1**
(45) Date de publication et mention de la délivrance du brevet: **12.11.2003**
(21) Numéro de dépôt: 97952980.7
(22) Date de dépôt: 22.12.1997
(51) Int. Cl.: G01D 5/245

(54) **PROCEDE DE MESURE NUMERIQUE DE POSITIONS**
VERFAHREN ZUR DIGITALEN POSITIONSMESSUNG
METHOD FOR DIGITAL POSITION MEASURING

(30) Priorité: 20.12.1996 FR 9616014
(43) Date de publication de la demande: 06.10.1999
(73) Titulaire: Delphi Technologies, Inc., Troy Michigan 48007 (US)
(72) Inventeur: CLAIRET, Patrick, F-67400 Illkirch (FR); CORBIER, Jean-Paul, F-06240 Beausoleil (FR); COURONNE, Christine, F-06100 Nice (FR); ZERAFFA, Philippe, F-06810 Cagnes sur Mer (FR)
(74) Mandataire: Littolff, Denis
(86) Numéro de dépôt international: FR9702387
(87) Numéro de publication internationale: WO98028597

(56) Documents cités:
- EP-A- 0 094 828
- EP-A- 0 560 520
- EP-A- 0 575 663
- US-A- 4 009 377

## Description

La présente invention concerne un procédé de mesure numérique de la position d'un parmi deux éléments en mouvement relatif. Elle s'applique de préférence à la mesure de la position angulaire absolue sur un tour d'éléments en rotation l'un par rapport à l'autre.

Le problème de la mesure d'angles de rotation, permettant de connaître à tout moment le déplacement angulaire absolu d'une pièce en rotation relativement à une autre, a généré une abondante littérature proposant un grand nombre de solutions. Ces solutions ont souvent été elles-mêmes déclinées en de multiples variantes.

A la base, les solutions connues utilisent d'une part un codage des positions, et d'autre part un moyen de lecture des codes, exprimant et transmettant la position angulaire instantanée d'une pièce en mouvement par rapport à une origine déterminée. Ce moyen de lecture, constitué généralement de capteurs, envoie des signaux à une unité centrale électronique capable de calculer ou de lire le déplacement angulaire effectué, et parfois d'utiliser les valeurs calculées pour réaliser des traitements plus étendus.

Un tel procédé peut par exemple être appliqué à un disque comportant lesdits codes, animé d'un mouvement de rotation par rapport aux moyens de mesure chargés de lire la position angulaire à l'instant t.

Parmi les solutions proposées dans l'art antérieur, on peut distinguer plusieurs familles de solutions, classées selon la méthode de codage employé, ou selon le mode de lecture.

Ainsi, on distingue traditionnellement les méthodes reposant sur un codage parallèle de celles qui sont basées sur un codage séquentiel de type série. Les modes de lecture sont différenciés selon qu'ils sont directs ou indirects.

En substance, un codage est dit parallèle lorsque l'ensemble du code exprimant une position peut être lu en une seule opération, en un signal d'horloge. A l'inverse, un codage séquentiel implique une lecture en série dudit code, ce qui nécessite évidemment plusieurs cycles d'horloge, ou plusieurs lectures successives.

Un codage est direct lorsque la valeur de l'angle est lue immédiatement, sans qu'il soit nécessaire d'effectuer d'autres calculs. Au contraire, le codage est dit indirect lorsque la mesure indique une base de calcul à laquelle il faut ajouter ou soustraire une valeur pour obtenir l'angle précis à mesurer. Selon une possibilité, on découpe le disque précité en secteurs codés, constituant la valeur de base à laquelle on ajoute ou soustrait un nombre de pas parcourus.

Dans cette configuration à disque codé, un codage direct parallèle peut conduire à une structure de codage radiale, chaque code disposé radialement sur le disque correspondant à une position angulaire immédiatement lisible. Pour que la résolution de la mesure soit correcte, il faut par exemple que le codage soit effectué sur huit bits, ce qui implique une résolution un peu inférieure à 1,5°.

Un codage direct parallèle périphérique est également possible, à condition de coder les positions sur l'ensemble de la périphérie du disque. L'espacement des éléments du code sur ladite périphérie correspond alors à celui des capteurs.

Dans les deux cas, le nombre de capteurs utilisés par le dispositif de mesure est élevé (huit ou neuf), d'où une solution relativement coûteuse, multipliant au surplus les conducteurs de connexion. Ces solutions sont adaptées lorsqu'on a besoin de connaître la position angulaire précise dès le démarrage du système, ce que permet la lecture directe.

A l'inverse, les solutions indirectes présentent une zone dite d'ombre au démarrage : il faut en effet avoir au moins changé de secteur pour communiquer une position exacte. Le choix de la solution dépend donc du cahier des charges, et notamment de la possibilité ou non de gérer la zone d'ombre au démarrage. Un codage indirect peut être parallèle, et utilise dans ce cas un nombre plus restreint qu'auparavant de capteurs, car les secteurs découpés dans le disque sont en nombre évidemment plus limité que les positions angulaires discrètes : un codage sur cinq bits, nécessitant par conséquent cinq capteurs, permettrait par exemple théoriquement une division du disque en trente deux secteurs.

Il a par ailleurs été proposé des solutions de mesure angulaire indirecte et séquentielle par codage en série des secteurs. Par exemple, le document EP-A-0 575 663 propose un codage utilisant trois capteurs et des pistes sur un disque tournant. Deux des pistes portent des marques équidistantes, et ces deux pistes sont décalées d'un quart de période afin de fournir, lors de leur lecture par deux capteurs, deux signaux en quadrature. Cette solution très classique permet de déterminer la direction de rotation et le déplacement en nombre de pas. Le document en question utilise un troisième capteur lisant une troisième piste. Cette piste porte des marques regroupées par six, qui, lues en série, donnent un nombre binaire qui est le numéro absolu du secteur correspondant. Ces groupes de six marques sont séparées par des groupes de 4 marques, toujours les mêmes, afin que l'organe recevant le signal de lecture de cette piste puisse constater le passage d'un secteur au suivant ou au précédent. Ce groupe de 4 marques, appelé séparateur, se représente dans ce cas par le mot de 4 bits « 0110 ». Les deux signaux mentionnés en premier sont acheminés vers une porte OU exclusif qui donne un signal de direction (Up/Down) et un signal d'horloge qui sert à synchroniser la lecture de la troisième piste et à l'interpréter.

Le même principe est exposé dans le brevet américain US-A-4 736 187; là encore deux capteurs lisent des marques et fournissent deux signaux en quadrature, qui, grâce à un OU exclusif, synchronisent la lecture de la 3e piste. Cette troisième piste donne la position angulaire absolue de l'organe en mouvement grâce à des codes équirépartis sur sa circonférence. Ici, les différents codes sont éloignés les uns des autres, et c'est leur distance physique qui permet au système d'interprétation de les différencier les uns des autres. Cette distance physique est mesurée en comptant les deux signaux en quadrature. En fait, on peut considérer que la distance entre deux codes, vide de toute marque, est lue par le capteur correspondant comme une succession de « 1 » (ou de « 0 », selon la convention arbitraire choisie), succession qui n'apparaît jamais parmi tous les codes des secteurs. Cette succession est donc un séparateur fait de n bits à « 1 » (ou à « 0 »).

La présente invention utilise aussi un codage indirect et séquentiel. Mais le mode de codage des secteurs est tel qu'il permet une détection plus rapide des séparateurs, et assure une bonne protection contre les fausses lectures des codes.

L'une des applications possibles de l'invention, la mesure de l'angle de rotation d'une colonne de direction de véhicule, permet l'existence d'une zone d'incertitude au démarrage. Elle impose également une résolution telle que cette solution est apparue particulièrement appropriée, comme on le verra en détail ci-après.

L'invention concerne un procédé de mesure conformément à la revendication 1.

Ensuite, la connaissance de la position absolue du secteur de l'élément doté du codage binaire est déduite de l'adresse mémoire du code de son identificateur.

La connaissance de la position précise du secteur n'est cependant pas suffisante, chaque secteur ayant en effet une largeur totalisant celles des unités de codage du séparateur et de l'identificateur. L'unique détermination du secteur aboutirait à une résolution de la lecture de la position plus que médiocre.

Par conséquent, la position absolue d'un élément par rapport à l'autre résulte en plus du comptage du nombre de bits transmis lors de la lecture séquentielle depuis le début du code connu du séparateur, identifiant le début d'un secteur.

Les bits résultent en effet de la lecture effectuée au passage d'unités de codage ayant toutes la même surface, d'où une déduction simple de la valeur à ajouter à la base de calcul obtenue en connaissant le secteur.

Selon une possibilité, la séquence de codage du séparateur exclue des codes des identificateurs comprend trois bits ayant la même valeur.

Pour compléter les codes des séparateurs, on a par exemple ajouté un bit de valeur inverse de ceux formant ladite séquence exclue, réalisant par conséquent un codage sur cinq bits desdits séparateurs.

Chaque séparateur comporte dans ce cas la succession de bits «01110» ou «10001».

De préférence, selon l'invention, les identificateurs sont également codés sur cinq bits, permettant théoriquement le codage de trente deux secteurs. Avec le procédé de l'invention, excluant les séquences à trois bits identiques, cette valeur se trouve ramenée à vingt quatre secteurs, comme on le verra plus en détail dans la suite.

Pour les applications évoquées, les éléments portant respectivement le codage et l'organe de lecture sont animés d'un mouvement relatif en rotation, la position angulaire de l'un par rapport à l'autre étant obtenue de manière absolue sur un tour.

Les choix effectués précédemment sont particulièrement appropriés pour ces applications.

Plus précisément, pour la mesure de l'angle d'une colonne de direction, les constructeurs automobiles demandent une résolution de 1,5°, et une zone d'incertitude au démarrage n'excédant pas 15°.

Or, dans le cadre de l'invention, les secteurs à lire séquentiellement sont au nombre de 24 répartis sur l'ensemble de la périphérie de l'un des éléments en rotation relative, chaque secteur étant à son tour divisé en dix pas égaux, correspondant chacun à un bit de codage lu à chaque changement d'état d'un signal d'horloge.

Chaque secteur comporte donc dix pas codables selon un 1 ou un 0. Sur ces dix bits, seuls cinq bits consécutifs sont affectés au codage du secteur proprement dit, et forment l'identificateur du secteur. Les cinq autres bits sont réservés à la séparation entre secteurs. En effet, l'identification précise d'un secteur exige que l'on sache avec précision que l'on se situe bien dans un secteur. D'où la nécessité d'avoir des zones de séparation, sans lesquelles la lecture séquentielle des codes n'aurait aucun sens, en l'absence de divisions de la surface codée.

Selon une des deux possibilités évoquées, dans les cinq pas réservés au codage du séparateur de secteurs, les deux bits d'extrémité ont une valeur basse, les trois bits du milieu identique ayant une valeur haute, c'est à dire que le séparateur se présente comme « 01110 ».

Pour éviter toute confusion, les cinq pas réservés à l'identification du secteur sont codés sur cinq bits en évitant le code identique au code du séparateur. Mais cette exclusion n'est pas suffisante à éviter toute confusion. En effet, pendant la rotation de l'élément tournant, le capteur lit des séquences séparateur-identificateur-séparateur, et parmi ces séquences se trouvent des suites de bits identiques au séparateur. Après exclusion de ces séquences, il reste vingt sept possibilités de codage des secteurs, correspondant à des angles de secteurs de 13,33°. En fait, comme le besoin n'est que de vingt-quatre secteurs de quinze degrés, il est possible d'exclure encore trois séquences. Ces séquences ne sont pas choisies au hasard. On exclut les codes qui contiennent quatre et cinq « 1 » successifs. Par ce système, comme les codes avec trois « 1 » consécutifs ont déjà été exclus, il n'y a plus dans les codes identificateurs utilisés aucune suite de plus de deux « 1 » consécutifs. Lors d'une lecture, toute suite de trois bits à « 1 » indiquera sans ambiguïté que l'on est en présence d'un séparateur, et le calcul permettant l'identification du secteur en cours pourra commencer immédiatement. Cette caractéristique est particulièrement intéressante dans le cas du traitement des signaux par un microcontrôleur. En effet, la capacité de commencer le traitement dès la détection de trois « 1 » consécutifs, quel que soit le sens de rotation, permet de gagner du temps, et donc soit de permettre un travail à de plus grandes vitesses de rotation, soit d'utiliser un microcontrôleur travaillant plus lentement, avec les avantages y liés en terme de coût, de rayonnement électromagnétique parasite, et de complexité.

Ce dispositif permet donc d'effectuer la mesure numérique de la position d'un élément muni de marques formant un codage binaire par rapport à un élément doté de capteurs permettant la lecture desdites marques de codage, lesquelles sont disposées sur deux pistes parallèles, dont l'une est dévolue à l'établissement des signaux d'horloge pour le cadencement de la lecture des marques formant le code de position de l'autre, au moins deux capteurs en regard de cette piste permettant l'établissement de deux signaux tout ou rien en quadrature par défilement relatif de marques de surface identique alternant leur code, dont la combinaison en OU exclusif fournit un signal d'horloge pour la lecture par au moins un capteur des marques de surface identique de l'autre piste, dont le codage fournit la position d'un élément par rapport à l'autre.

Il se caractérise principalement en ce que la géométrie et la disposition des marques des deux pistes est telle que le passage d'une marque à sa suivante est deux fois plus fréquent pour le capteur de la piste de codage de positionnement que pour les capteurs de la piste d'horloge, lesdites pistes étant en outre disposées de telle sorte que ledit passage est en outre décalé, le passage d'une marque à l'autre sur la piste d'horloge intervenant lorsque le capteur lisant les codes de la piste de codage est au milieu d'une marque.

Dans l'application préférentielle, les éléments munis des capteurs et des pistes de codages sont animés d'un mouvement relatif de rotation, l'élément codé étant un disque comprenant deux pistes de codage concentriques, les marques formant le codage étant des secteurs angulaires délimités par deux cercles concentriques bordant chaque piste.

Le dispositif fournit à un organe récepteur extérieur les signaux qui lui permettront, grâce à un traitement approprié, de déterminer l'angle absolu sur un tour de l'organe en rotation.

Le dispositif selon l'invention ne nécessite que trois capteurs pour lire une position angulaire avec une résolution suffisante pour les applications prévues, en l'occurrence égale à 1,5°. Cette résolution de 1,5° est réalisable en pratique avec des moyens et des composants de coût raisonnable, comme l'exige le domaine d'application du produit.

Deux des capteurs génèrent des signaux en quadrature de phase au cours du déplacement angulaire relatif des deux éléments, dont l'analyse permet de déduire le sens de rotation relatif, et dont la combinaison en OU exclusif génère un signal dont chaque front ascendant ou descendant marque le début d'un pas égal de rotation, constituant ainsi un signal d'horloge qui est uniquement fonction du déplacement angulaire. C'est l'organe de traitement recevant les signaux qui génère, par sa circuiterie, interne le OU exclusif.

Le troisième capteur retransmet des informations codées en série concernant le secteur en face duquel il se trouve, à la cadence de un bit de codage par changement d'état du signal d'horloge.

En réalité, les deux premiers capteurs réalisent une horloge matérielle cadençant la lecture opérée par le troisième capteur.

L'ensemble des trois capteurs coopère donc avec deux pistes de codage distinctes dotées d'un mouvement de rotation identique relativement aux capteurs, une piste dévolue aux capteurs générant les signaux en quadrature nécessaires à l'établissement du signal d'horloge, et une piste comprenant les codes séries nécessaires à l'identification des secteurs, lesdits capteurs envoyant en continu l'information lue.

Comme on l'a vu, sur cette dernière piste, chaque secteur défini sur l'un des deux éléments en mouvement relatif comporte une zone de codage permettant l'identification proprement dite du secteur et une zone de codage d'un séparateur de secteurs, lesdites zones étant lues séquentiellement par le troisième capteur.

On a évoqué précédemment le problème des multiples connexions dues à la pluralité de capteurs : selon une possibilité, les trois signaux issus des capteurs sont multiplexés en un seul signal, par exemple codé en huit niveaux de tension, qui ne nécessite qu'une connexion vers l'organe de traitement. Une variante plus simple consistera bien entendu à laisser lesdites trois connexions en parallèle, envoyées directement du capteur vers ledit organe de traitement.

A l'aide des éléments précédents, le dispositif selon l'invention donne la mesure de la position angulaire, qui résulte de l'identification du secteur dans lequel se situe la position à mesurer, transmise par le capteur isolé, alors que le déplacement entre ladite position et le début dudit secteur, calculé en nombre de pas, est transmis par les deux autres capteurs combinés en OU exclusif.

Selon une possibilité, les marques de codage sont des trous, équirépartis sur la piste d'horloge avec une surface du trou égale à la surface entre deux trous consécutifs.

Alternativement, les marques de codage sont constituées de marques de couleurs différentes, équiréparties et de surface équivalente pour chaque couleur sur la piste d'horloge.

De préférence, la lecture des données codées sur l'un des éléments en rotation relative est effectuée par des capteurs optiques.

De préférence encore, lesdits capteurs fonctionnent en optique réfléchissante.

Toutefois, rien n'interdit de prévoir un fonctionnement à l'aide de capteurs optiques traversants, voire de capteurs magnétiques, les secteurs étant alors recouverts d'une couche de matériau magnétique selon le code affecté à chaque secteur, et coopérant avec des détecteurs appropriés.

Selon une possibilité, le disque de codage est réalisé en métal poli, et coopère avec des capteurs émetteurs et récepteurs de lumière, par réflexion.

Selon une configuration alternative, le disque de codage est réalisé en matière plastique métallisée en surface, et coopère avec des capteurs émetteurs et récepteurs de lumière, par réflexion.

On a précédemment évoqué l'existence d'un disque codé, coopérant avec des capteurs fixes. L'invention pourrait cependant très simplement s'appliquer à des capteurs tournant avec un élément rotatif, coopérant avec des pistes codées fixes, solidaires d'une pièce immobile.

L'invention s'applique également à des mesures de position de deux éléments en mouvement de translation relativement l'un à l'autre.

Il est cependant clair qu'une des applications préférentielles du dispositif de mesure de l'invention sera la mesure de l'angle de déplacement d'un volant d'un véhicule automobile, application pour laquelle le cahier des charges correspond particulièrement bien aux valeurs précises données ci-dessus.

L'invention va maintenant être décrite plus en détail, en référence aux figures annexées, pour lesquelles :
- La figure 1 représente un disque rotatif codé ;
- La figure 2 montre la position relative d'un tel disque par rapport aux capteurs fixés à un support combinatoire ;
- La figure 3 est un diagramme des signaux émis par les capteurs, ainsi que du signal d'horloge ;
- La figure 4 donne le principe du codage des secteurs ;
- La figure 5 représente un tableau des codes permis et exclus pour le codage des secteurs ;
- La figure 6 illustre une possibilité d'application de ce principe dans le cadre de l'invention ; et
- La figure 7 montre un schéma électronique d'un circuit placé en aval des capteurs, permettant un codage par niveaux de tension.

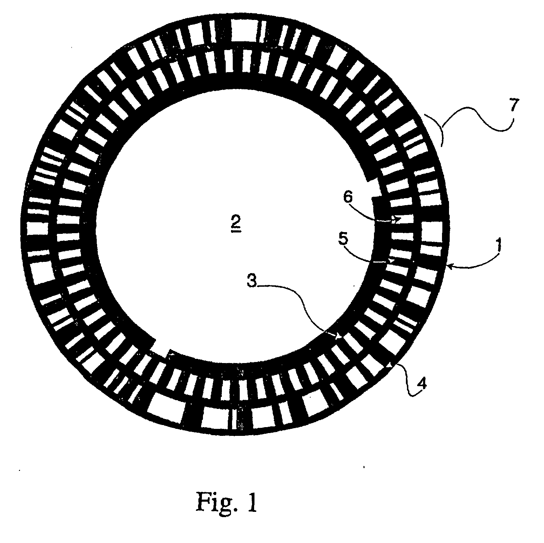

Le disque 1 codé de la figure 1 comporte un orifice central 2 destiné à le relier mécaniquement à un arbre tournant (non représenté). Ce disque 1 comprend deux pistes 3, 4 de codage périphériques concentriques, destinées à deux fonctions distinctes.

La piste intérieure 3 comporte des unités ou marques de codage 5, 6 de même écartement angulaire, codées alternativement suivant deux valeurs 0 et 1. De préférence, lesdites unités de codage sont matérialisées par des trous ou fenêtres dans le support, les fenêtres indiquant un « 1 », et les parties non percées indiquant un « 0 ». Bien que cette convention paraisse arbitraire, elle vient du fait que lorsque la source lumineuse d'un capteur éclaire le disque de codage, et qu'elle se trouve en face d'un trou, alors la lumière réfléchie par le disque est très faible. De ce fait le phototransistor du capteur ne reçoit pas de lumière. Il est bloqué et son collecteur est au niveau haut, c'est à dire à « 1 ».

La piste extérieure 4 comporte des unités ou marques de codage 7 dont l'écartement angulaire unitaire est deux fois plus étroit, et codées également suivant deux valeurs 0 et 1, selon un codage qui dépend de sa fonction particulière, et qui sera vu en détail ci-après. La piste 4 est réalisée de la même façon que la piste 3, avec des trous matérialisant le codage.

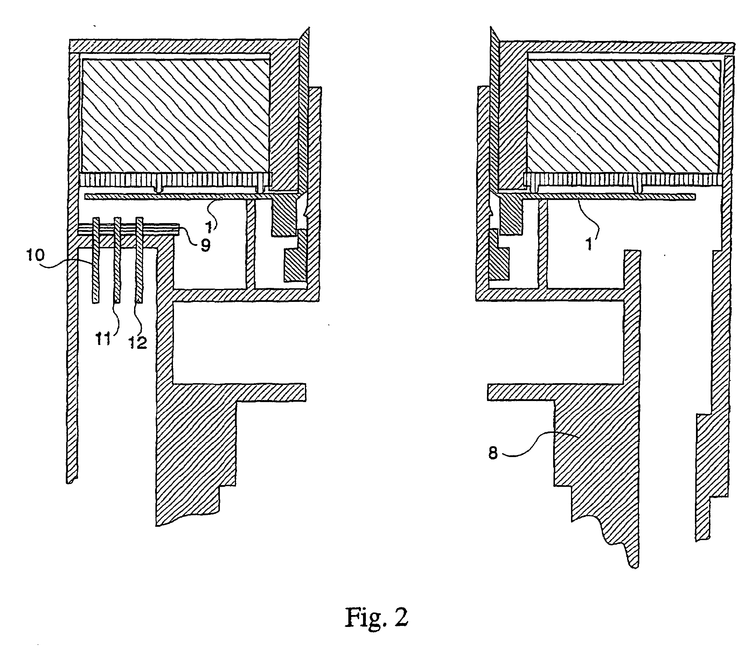

La figure 2 représente une section très schématique de l'agencement relatif d'un tel disque codé 1 dans un support combinatoire 8 placé, dans le véhicule, autour de la colonne de direction (non représentée) directement sous le volant.

L'intérêt de cette figure 2 est de faire apparaître les capteurs d'angles 10, 11, 12 fixés audit support combinatoire 8 et connectés à un circuit imprimé 9 disposé lui-même en regard du disque codé 1.

Le capteur 10, placé en regard de la piste 4 de la figure 1, lit les codes identifiant les secteurs, entre les codes des séparateurs de secteurs. Ces codes sont constitués d'unités de codage 7 auxquelles est affecté un codage en 1 ou en 0.,

Les capteurs 11 et 12 sont en face de la piste 3, de sorte que lorsqu'un desdits capteurs est en bordure de l'une desdites zones, l'autre capteur est au milieu d'une unité de même codage. Les signaux générés, S1 et S2, sont en quadrature de phase, et adaptés au procédé de mesure précité. La technologie utilisée pour leur affecter un codage alterné est bien entendu la même qu'auparavant.

Schématiquement, pour faciliter la compréhension, les pattes de connexion en sortie des trois capteurs sont, sur la figure 2, identifiés auxdits capteurs 10, 11, 12. Il est bien évident que les deux capteurs 11 et 12 sont cependant sur la même piste, et non pas sur deux rayons distincts.

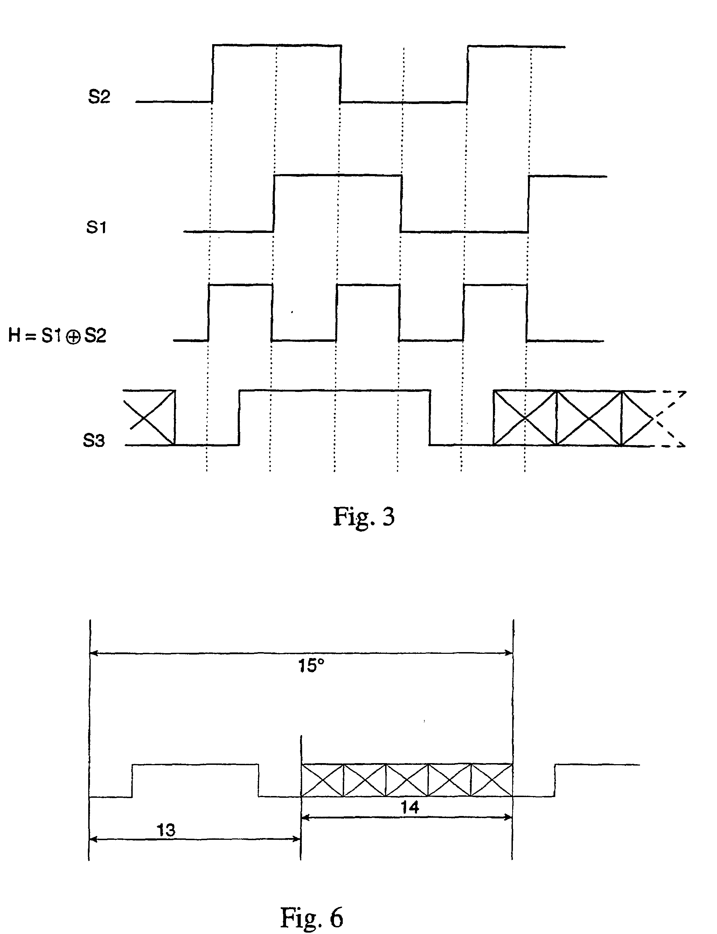

Le diagramme de la figure 3 montre les signaux S1 et S2 générés par les capteurs 11 et 12, ainsi que le signal obtenu par la combinaison logique en OU exclusif de l'organe de traitement, donnant un signal d'horloge H dépendant uniquement de l'angle parcouru, et non du temps. Apparaît aussi sur cette figure 3 le signal S3. En particulier, on distingue les cinq bits du séparateur, et la fin et le début de deux identificateurs contigus.

C'est ce signal H qui cadence la lecture opérée par le capteur 10 générant un signal S3, et plus généralement qui sert d'horloge pour les opérations de traitement ultérieur aboutissant à la mesure de l'angle. Il est important de souligner que le capteur 10 et la piste 4 sont disposés par rapport à la piste 3 de telle sorte que les transitions du signal H tombent toujours au milieu des états du signal S3. De cette façon, la lecture de S3, synchronisée sur les transitions de H, donc de S1 et S2, se fait toujours quand son état est stable, ce qui diminue fortement les aléas et les fausses lectures possibles en milieu parasité.

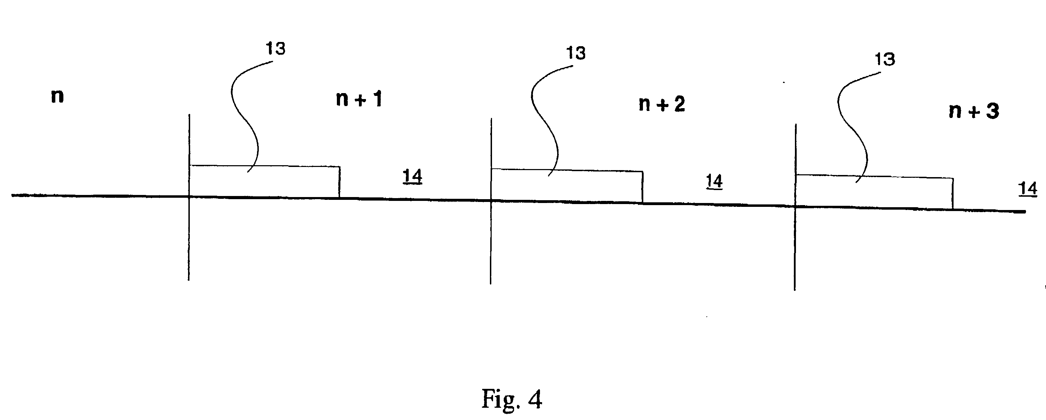

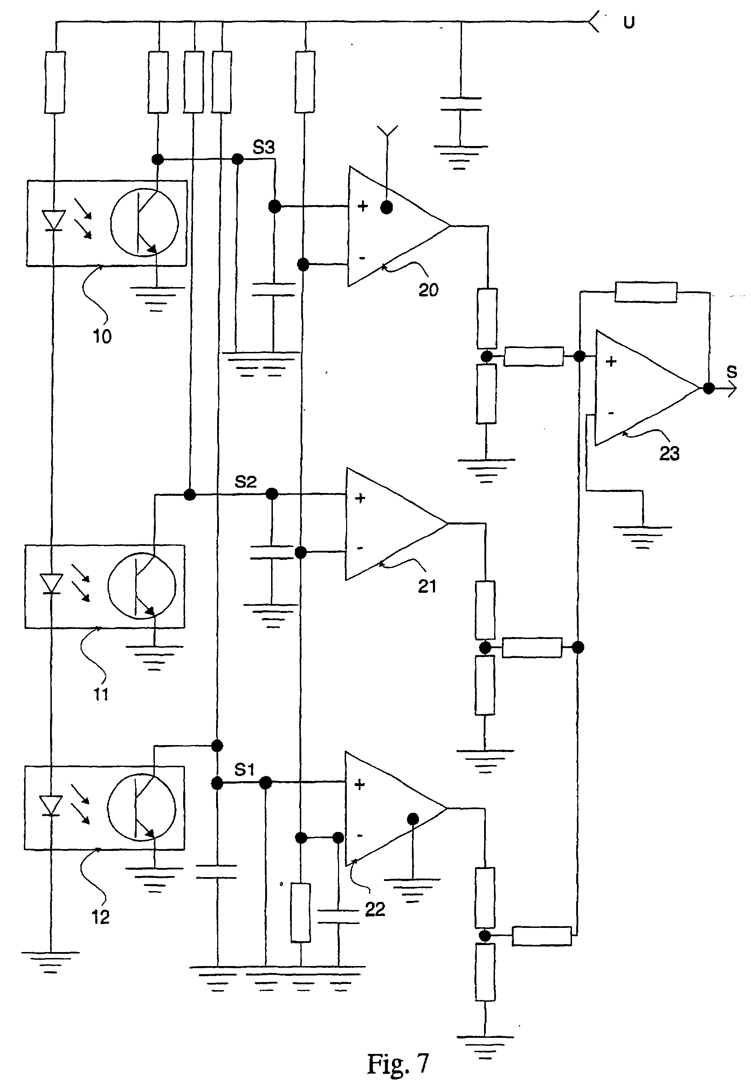

L'explication de la méthode de codage des secteurs apparaît en figures 4 et 6. En figure 4 sont schématisés quatre secteurs successifs n à n + 3, en réalité délimités sur le disque codé à l'aide dudit codage. En figure 6, le codage est montré : chaque secteur comporte deux zones, un séparateur 13 et une zone de codage 14 proprement dite. Le séparateur 13 a toujours la même valeur, et la zone de codage 14 est codée sur cinq bits, et permet d'identifier le secteur par rapport à l'origine. Le séparateur 13 permet de reconnaître qu'il y a changement de secteur, et que le processus d'identification peut s'enclencher.

Selon une application préférentielle de l'invention, le séparateur est également codé sur cinq bits, avec les deux bits d'extrémité à 0 et les trois bits du milieu à 1.

Pour éviter toute confusion entre la zone affectée au séparateur 13 et celle affectée à l'identification 14 du secteur, les codes employés pour ladite identification ne comprennent aucun code égal au séparateur, ni aucun code, qui combiné avec le séparateur précédent et le séparateur suivant, soit égal au séparateur, ni enfin, comme expliqué plus haut, aucun code qui contienne trois ou quatre « 1 » consécutifs, c'est à dire la séquence de trois « 1 » consécutifs devant être exclue.

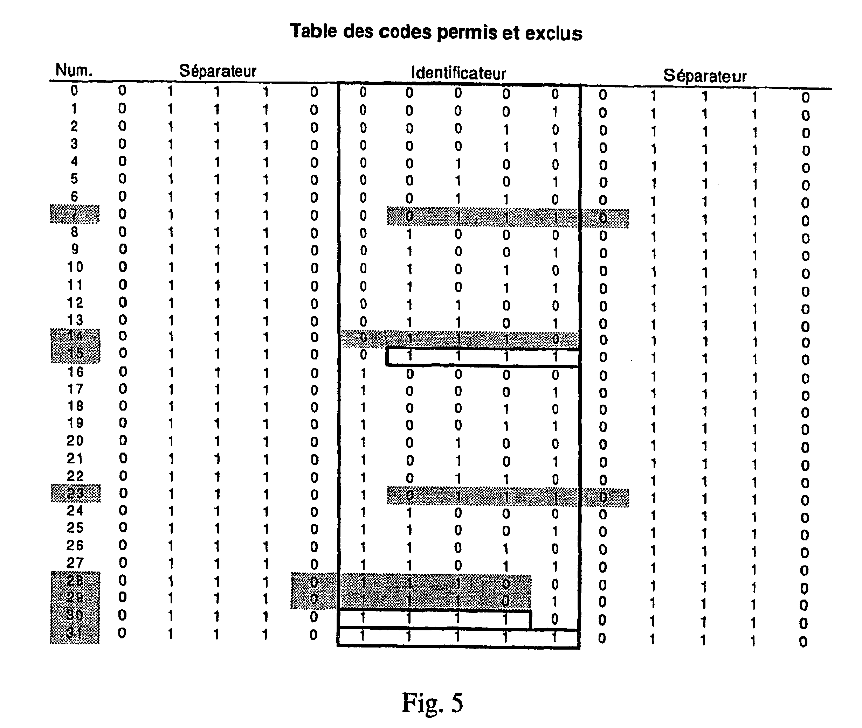

C'est ce qui apparaît dans le tableau constitué par la figure 5. Ce tableau montre les trente-deux séquences séparateur-identificateur-séparateur possibles. Les lignes en grisé montrent un code égal au séparateur. Les codes de ces lignes sont exclus des codes utilisables. Les séquences encadrées sont celles exclues volontairement, car contenant la séquence exclue pour obtenir un total de vingt quatre codes possibles.

L'exemple préférentiel décrit jusqu'ici comporte alors vingt quatre secteurs codés sur cinq bits. Cet exemple n'est bien entendu pas limitatif de l'invention, et l'on peut sans difficulté prévoir un plus grand nombre de secteurs, codés sur plus de cinq bits, les limites étant plus d'ordre technique, à savoir notamment les limitations de résolution permises par les moyens de lecture.

La figure 7 présente un exemple de schéma électronique qui pourrait être utilisé en sortie des capteurs pour coder par niveaux de tension les signaux émis S1, S2, S3 par les capteurs 10 à 12. Chacun de ces signaux est envoyé vers un amplificateur 20, 21, 22 monté en comparateur de tension de sorte que les niveaux de tensions présentés à l'entrée de l'amplificateur de sortie 23 sont parfaitement mis en forme. Les signaux issus des trois comparateurs subissent une somme pondérée par les paires de résistances 24/25, 26/27 et 28/29, de sorte qu'ils fournissent en sortie un signal analogique unique à huit niveaux reflétant leur valeur. Les condensateurs qui relient les signaux S1, S2 et S3 à la masse sont de petite valeur; ils filtrent les signaux, et contribuent à éliminer les parasites éventuels.

Ce moyen de codage permet d'aboutir à une unique liaison S en sortie du circuit.

## Revendications

1. Procédé de mesure numérique indirecte et séquentielle de la position absolue d'un élément (1) comportant un codage binaire réalisé à l'aide d'unités de codage (7) de même surface, en mouvement relatif par rapport à un élément (8) doté d'un organe de lecture (10) dudit codage (7), ledit codage (7) délimitant des secteurs différenciés (13, 14) comportant chacun une zone de séparation identique, appelée séparateur (13), et une zone identifiant un unique secteur, appelée identificateur (14), la liste des codes des identificateurs (14) étant contenue dans une zone mémoire accessible via un organe de traitement de l'information binaire transmise bit par bit séquentiellement par ledit organe de lecture (10) lorsque les éléments sont en mouvement relatif, le codage du séparateur (13) comprenant une séquence binaire qui est exclue du codage des identificateurs (14), identifiant par conséquent immédiatement un séparateur (13), et permettant de déduire l'identificateur (14) qui le suit, **caractérisé en ce que** la position du secteur qui correspond à l'identificateur (14) disposé après le séparateur (13) identifié est obtenue par balayage de la zone mémoire contenant la liste des codes des identificateurs (14), la connaissance de la position absolue du secteur de l'élément (1) doté du codage binaire (7) étant déduite de l'adresse mémoire du code dudit identificateur (14).

2. Procédé de mesure numérique indirecte et séquentielle selon la revendication 1, **caractérisé en ce que** la position absolue d'un élément (1) par rapport à l'autre (8) résulte du comptage du nombre de bits transmis lors de la lecture séquentielle depuis le début du code connu du séparateur (13), identifiant le début d'un secteur.

3. Procédé de mesure numérique indirecte et séquentielle selon l'une quelconque des revendications précédentes, **caractérisé en ce que** la séquence de codage du séparateur (13) exclue des codes des identificateurs (14) comprend trois bits ayant la même valeur.

4. Procédé de mesure numérique indirecte et séquentielle selon la revendication précédente, **caractérisé en ce que** les codes des séparateurs (13) comprennent trois bits de même valeur entourés par un bit de valeur inverse à chaque extrémité de la séquence.

5. Procédé de mesure numérique indirecte et séquentielle selon la revendication précédente, **caractérisé en ce que** les bits centraux sont au niveau haut.

6. Procédé de mesure numérique indirecte et séquentielle selon l'une des revendications 4 et 5, **caractérisé en ce que** les identificateurs (14) sont codés sur cinq bits, permettant le codage de vingt quatre secteurs.

7. Procédé de mesure numérique indirecte et séquentielle selon l'une quelconque des revendications précédentes, **caractérisé en ce que** les éléments (1, 8) portant respectivement le codage (7) et l'organe de lecture (10) sont animés d'un mouvement relatif en rotation, la position angulaire de l'un par rapport à l'autre étant obtenue de manière absolue sur un tour.

## Patentansprüche

1. Verfahren zum indirekten und sequentiellen digitalen Messen der absoluten Position eines Elements (1), das umfaßt: eine binäre Codierung, die mit Hilfe von Codierungseinheiten (7) mit gleicher Oberfläche verwirklicht wird, die relativ zu einem Element (8) bewegt werden, das mit einem Organ (10) zum Lesen der Codierung (7) versehen ist, wobei die Codierung (7) unterschiedene Sektoren (13, 14) begrenzt, die jeweils die gleiche Trennzone, die Separator (13) genannt wird, und eine Zone, die einen einzigen Sektor identifiziert und Identifizierer (14) genannt wird, umfassen, wobei die Liste der Codes der Identifizierer (14) in einer Speicherzone enthalten ist, auf die über ein Organ für die Verarbeitung binärer Informationen zugegriffen werden kann, die bitweise sequentiell von dem Leseorgan (10) übertragen werden, wenn sich die Elemente relativ zueinander bewegen, wobei die Codierung des Separators (13) eine binäre Folge enthält, die nicht in der Codierung der Identifizierer (14) enthalten ist und daher direkt einen Separator (13) identifiziert und ermöglicht, den ihm folgenden Identifizierer (14) abzuleiten, **dadurch gekennzeichnet, daß** die Position des Sektors, der dem nach dem identifizierten Separator (13) angeordneten Identifizierer (14) entspricht, durch Abtasten der Speicherzone, die die Liste der Codes der Identifizierer (14) enthält, erhalten wird, wobei die Kenntnis der absoluten Position des Sektors des mit der binären Codierung (7) versehenen Elements (1) aus der Speicheradresse des Codes des Identifizierers (14) abgeleitet wird.

2. Verfahren zum indirekten und sequentiellen digitalen Messen nach Anspruch 1, **dadurch gekennzeichnet, daß** sich die absolute Position eines Elements (1) in bezug auf das andere (8) aus der Zählung der Zahl der Bits ergibt, die bei dem sequentiellen Lesen ab dem Beginn des den Anfang eines Sektors angebenden bekannten Codes des Separators (13) übertragen werden.

3. Verfahren zum indirekten und sequentiellen digitalen Messen nach einem der vorhergehenden Ansprüche, **dadurch gekennzeichnet, daß** die Codierungsfolge des Separators (13), die nicht in den Codes der Identifizierer (14) enthalten ist, drei Bits mit demselben Wert enthält.

4. Verfahren zum indirekten und sequentiellen digitalen Messen nach dem vorhergehenden Anspruch, **dadurch gekennzeichnet, daß** die Codes der Separatoren (13) drei Bits mit demselben Wert, die an jedem Ende der Folge von einem Bit mit dem entgegengesetzten Wert umgeben sind, enthalten.

5. Verfahren zum indirekten und sequentiellen digitalen Messen nach dem vorhergehenden Anspruch, **dadurch gekennzeichnet, daß** die mittleren Bits hohen Pegel haben.

6. Verfahren zum indirekten und sequentiellen digitalen Messen nach einem der Ansprüche 4 und 5, **dadurch gekennzeichnet, daß** die Identifizierer (14) mit fünf Bits codiert sind, was die Codierung von vierundzwanzig Sektoren ermöglicht.

7. Verfahren zum indirekten und sequentiellen digitalen Messen nach einem der vorhergehenden Ansprüche, **dadurch gekennzeichnet, daß** die Elemente (1, 8), die die Codierung (7) bzw. das Leseorgan (10) tragen, zu einer relativen Drehbewegung angetrieben werden, wobei die Winkelposition des einen in bezug auf das andere bei einer Umdrehung in absoluter Weise erhalten wird.

## Claims

1. Process for indirect and sequential digital measurement of the absolute position of an element (1) including binary coding formed by means of coding units (7) of same area, in motion relative to an element (8) provided with an organ (10) for reading the said coding (7), the said coding (7) defining differentiated sectors (13, 14) each including an identical separation zone called a separator (13), and a zone identifying a single sector, called an identifier (14), the list of the codes of the identifiers (14) being contained in a memory zone accessible via an organ for processing the binary data sequentially transmitted bit by bit by the said reading organ (10) when the elements are in relative motion, the coding of the separator (13) comprising a binary sequence which is excluded from the coding of the identifiers (14), consequently immediately identifying a separator (13) and permitting deduction of the identifier (14) which follows it, ***characterised by** the fact that* the position of the sector which corresponds to the identifier (14) arranged after the identified separator (13) is obtained by scanning the memory zone containing the list of the codes of the identifiers (14), knowledge of the absolute position of the sector of the element (1) provided with the binary coding (7) being deduced from the memory address of the code of the said identifier (14).

2. Indirect and sequential digital measurement process as described in claim 1, ***characterised by** the fact that* the absolute position of one element (1) relative to the other (8) results from counting the number of bits transmitted on sequential reading from the start of the known code of the separator (13), identifying the start of a sector.

3. Indirect and sequential digital measurement process as described in any one of the preceding claims, ***characterised by** the fact that* the coding sequence of the separator (13) excluded from the codes of the identifiers (14) comprises three bits having the same value.

4. Indirect and sequential digital measurement process as described in the preceding claim, ***characterised by** the fact that* the codes of the separators (13) comprise three bits of the same value surrounded by one bit of opposite value at each end of the sequence.

5. Indirect and sequential digital measurement process as described in the preceding claim, ***characterised by** the fact that* the central bits are high level.

6. Indirect and sequential digital measurement process as described in one of claims 4 and 5, ***characterised by** the fact that* the identifiers (14) are coded over five bits, allowing the coding of twenty-four sectors.

7. Indirect and sequential digital measurement process as described in any one of the preceding claims, ***characterised by** the fact that* the elements (1, 8) respectively carrying the coding (7) and the reading organ (10) have a relative rotary motion, the angular position of one relative to the other being obtained in absolute manner over one revolution.
